(19) **Europäisches Patentamt**
**European Patent Office**
**Office européen des brevets**

(11) **EP 3 140 877 B1**

(12) **EUROPEAN PATENT SPECIFICATION**

(45) Date of publication and mention
of the grant of the patent:
**12.02.2020 Bulletin 2020/07**

(21) Application number: **15724077.1**

(22) Date of filing: **08.05.2015**

(51) Int Cl.:
*H01M 4/62* (2006.01)    *H01M 4/525* (2010.01)
*H01M 4/04* (2006.01)    *H01M 4/36* (2006.01)
*H01M 4/38* (2006.01)    *H01M 10/052* (2010.01)
*H01M 10/0562* (2010.01)

(86) International application number:
**PCT/JP2015/002359**

(87) International publication number:
**WO 2015/170481 (12.11.2015 Gazette 2015/45)**

(54) **POSITIVE ELECTRODE, BATTERY, AND ELECTRONIC DEVICE**

POSITIVE ELEKTRODE, BATTERIE UND ELEKTRONISCHE VORRICHTUNG

ÉLECTRODE POSITIVE, BATTERIE, ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2014 JP 2014097618
18.09.2014 JP 2014190201
31.03.2015 JP 2015072861**

(43) Date of publication of application:
**15.03.2017 Bulletin 2017/11**

(73) Proprietor: **Murata Manufacturing Co., Ltd.
Nagaokakyo-shi, Kyoto 617-8555 (JP)**

(72) Inventors:
• **SHIBATA, Harumi
Tokyo, 1080075 (JP)**
• **FURUYA, Tatsuya
Tokyo, 1080075 (JP)**
• **FURUKAWA, Keiko
Tokyo, 1080075 (JP)**
• **SUZUKI, Masamitsu
Tokyo, 1080075 (JP)**
• **SUDO, Go
Tokyo, 1080075 (JP)**

(74) Representative: **Witte, Weller & Partner
Patentanwälte mbB
Postfach 10 54 62
70047 Stuttgart (DE)**

(56) References cited:
**WO-A1-2013/051478    JP-A- 2001 126 757
JP-A- 2001 243 984    JP-A- 2011 204 510
US-A1- 2009 325 064    US-A1- 2012 308 900
US-A1- 2012 321 940    US-A1- 2013 196 227**

• **Pascal Richet: "Glass transitions and
thermodynamic properties of amorphous SiO2,
NaAISinO2n+2 and KAISi308", Geochimica et
Cosmochimica Acta, 1 March 1984 (1984-03-01),
pages 453-470, XP055489610, DOI:
10.1016/0016-7037(84)90274-6 Retrieved from the
Internet:
URL:https://ac.els-cdn.com/001670378490274
6/1-s2.0-0016703784902746-main.pdf?_tid=e1
6207f8-9b08-4e08-a2d0-86f3ee708483&acdnat=
1530601712_ad4da55fc42028ba3a507474123e06
c 8 [retrieved on 2018-07-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present technology relates to a positive electrode, a battery, and an electronic device.

## Background Art

As binders of lithium ion batteries, organic binders such as polyvinylidene fluoride (PVdF), polytetrafluoroethylene (PTFE), and styrene butadiene rubber (SBR) are usually used.

In recent years, inorganic binders may be used in place of the above organic binders. PTL 1 describes a process of using an inorganic compound containing Li as a sintering auxiliary agent (a binder), and setting the temperature for calcining an electrode precursor to the range of 750 degrees C to 1100 degrees C (refer to paragraphs 0062 and 0066). PTL 2 describes a process of adding lithium phosphate as a sintering auxiliary agent to lithium cobalt oxide as a positive electrode active material powder to prepare a mixture, pressure-forming the mixture, and sintering the formed article at a melting point more than or equal to the melting point of lithium phosphate and a temperature of 1000 degrees C or less (refer to claim 5).

WO 2013/051478 A1, JP 2001243984 A, JP 2001126757 A, US 2012/321940 A1, US 2009/325064 A1, US 2013/196227 A1, US 2012/308900 A1 and JP 2011204510A disclose all inorganic binders for secondary batteries.

## Citation List

## Patent Literature

PTL 1: JP 2012-243743 A
PTL 2: JP 2010-177024 A

## Summary

## Technical Problem

In the present technology, it is desirable to provide an electrode capable of improving the discharge capacity by calcination at a low temperature of 600 degrees C or less, a method of producing the same, a battery including the same, and an electronic device.

## Solution to Problem

In one embodiment, a battery is provided including a positive electrode, a negative electrode, and an electrolyte layer between the positive electrode and the negative electrode. The positive electrode includes at least one kind of an amorphous inorganic binder (B) that includes an oxide of at least one kind of element selected from the group including bismuth (Bi), zinc (Zn), boron (B), silicon (Si) and vanadium (V). A weight ratio (A : B) of the positive electrode active material (A), and the amorphous inorganic binder (B), is in the range of 25 : 75 to 75 : 25. The amorphous inorganic binder (B) is calcinated at a temperature, which temperature is more than or equal to a glass transition point of the amorphous inorganic binder (B) and 600 °C or less. The amorphous inorganic binder (B) includes at least one material selected from the group of $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$-$B_2O_3$, $ZnO$-$SiO_2$- $B_2O_3$-$R_2O$-$RO$, $ZnO$-$SiO_2$-$B_2O_3$-$RO$, $ZnO$-$SiO_2$-$B_2O_3$ and $V_2O_5$-$P_2O_5$-$RO$, wherein R represents an alkali metal element or an alkali earth metal element.

In another embodiment, an electronic device includes a battery pack including at least one secondary battery. The secondary battery includes a positive electrode, a negative electrode, and an electrolyte layer between the positive electrode and the negative electrode. The positive electrode includes at least one kind of an amorphous inorganic binder (B) that includes an oxide of at least one kind of element selected from the group including bismuth (Bi), zinc (Zn), boron (B), silicon (Si) and vanadium (V). A weight ratio (A : B) of the positive electrode active material (A), and the amorphous inorganic binder (B), is in the range of 25 : 75 to 75 : 25. The amorphous inorganic binder (B) is calcinated at a temperature, which temperature is more than or equal to a glass transition point of the amorphous inorganic binder (B) and 600 °C or less. The amorphous inorganic binder (B) includes at least one material selected from the group of $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$- $B_2O_3$, $ZnO$-$SiO_2$- $B_2O_3$-$R_2O$-$RO$, $ZnO$-$SiO_2$-

$B_2O_3$-RO, ZnO-$SiO_2$-$B_2O_3$ and $V_2O_5$-$P_2O_5$-RO, wherein R represents an alkali metal element or an alkali earth metal element.

A positive electrode comprising:

an amorphous inorganic binder (B) that includes an oxide of at least one kind of element selected from the group including bismuth (Bi), zinc (Zn), boron (B), silicon (Si) and vanadium (V), wherein a weight ratio (A:B) of the positive electrode active material (A), and the amorphous inorganic binder (B), is in the range of 25:75 to 75:25, wherein the amorphous inorganic binder (B) is calcinated at a temperature which temperature is more than or equal to a glass transition point of the amorphous inorganic binder (B) and 600 °C or less. The amorphous inorganic binder (B) includes at least one material selected from the group of $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$- $B_2O_3$, ZnO-$SiO_2$- $B_2O_3$-$R_2O$-RO, ZnO-$SiO_2$- $B_2O_3$-RO, ZnO-$SiO_2$-$B_2O_3$ and $V_2O_5$-$P_2O_5$-RO, wherein R represents an alkali metal element or an alkali earth metal element.

[Advantageous Effects of Invention]

The discharge capacity can be improved by calcination at a low temperature of 600 degrees C or less.

**Brief Description of Drawings**

[fig.1]Fig. 1 is a cross-sectional view showing a configuration example of a battery according to a first embodiment of the present technology.
[fig.2]Fig. 2 is a cross-sectional view showing a configuration example of a battery according to a modification of the first embodiment of the present technology.
[fig.3]Fig. 3 is a block diagram showing an example of the configuration of electronic device according to a second embodiment of the present technology.
[fig.4]Fig. 4 is a graph showing discharge curves of batteries of Examples 1 to 4 and Comparative example 1.

**Description of Embodiments**

The embodiments of the present technology will be described in the following order:

1 First Embodiment

1.1 Configuration of Battery
1.2 Method of Producing Battery
1.3 Effects
1.4 Modification

2 Second Embodiment

2.1 Configuration of Electronic Equipment
2.2 Modification

<1 First Embodiment >

(1.1 Configuration of Battery)

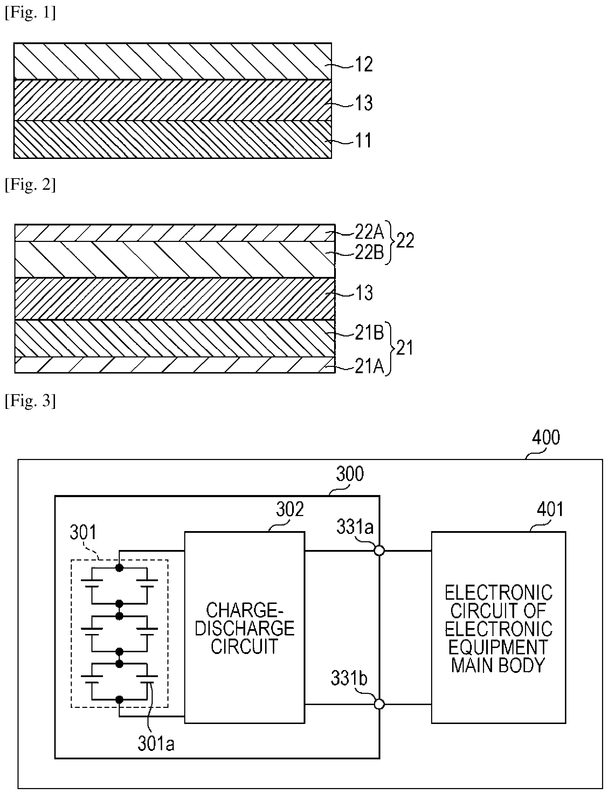

Fig. 1 is a cross-sectional view showing a configuration example of a battery according to a first embodiment of the present technology. As shown in Fig. 1, this battery includes a positive electrode 11, a negative electrode 12, and a solid electrolyte layer 13. The solid electrolyte layer 13 is provided between the positive electrode 11 and the negative electrode 12. The battery is a so-called all-solid-state battery, and is a secondary battery in which the battery capacity is repeatedly discharged by receipt of lithium (Li) as an electrode reaction substance. That is, the battery described herein may be a lithium ion secondary battery in which a negative electrode capacity can be obtained by absorbing and releasing lithium ions or may be a lithium metal secondary battery in which a negative electrode capacity can be obtained by deposition and dissolution of lithium metal.

(Positive Electrode)

A positive electrode 11 is a positive electrode active material layer that includes one or two or more kinds of positive electrode active materials and a binder. The positive electrode 11 may include a material such as a conductive agent, if necessary.

The positive electrode active material includes a positive electrode material capable of absorbing and releasing lithium ions as an electrode reaction substance. The positive electrode material is preferably a lithium-containing compound from the viewpoint of a high energy density, however, it is not limited thereto. The lithium-containing compound is, for example, a composite oxide which contains lithium and a transition metal element as constituent elements (a lithium transition metal composite oxide) or a phosphate compound which contains lithium and a transition metal element as constituent elements (a lithium transition metal phosphate compound). Among them, the transition metal element is preferably any one kind or two or more kinds of cobalt (Co), nickel (Ni), manganese (Mn), and iron (Fe). This is because a higher voltage is obtained.

The chemical formula of the lithium transition metal composite oxide is represented by, for example, $Li_xM1O_2$, or $Li_yM2O_4$, and the chemical formula of the lithium transition metal phosphate compound is represented by, for example, $Li_zM3PO_4$. In this regard, M1 to M3 represents one kind or two or more kinds of transition metal elements and values of x to z are arbitrary values.

The lithium transition metal composite oxide is, for example, $LiCoO_2$, $LiNiO_2$, $LiVO_2$, $LiCrO_2$ or $LiMn_2O_4$. The lithium transition metal phosphate compound is, for example, $LiFePO_4$, $LiCoPO_4$, or the like.

In addition, the positive electrode active material may be, for example, an oxide, a disulfide, a chalcogenide or a conductive polymer. The oxide is, for example, titanium oxide, vanadium oxide or manganese dioxide. The disulfide is, for example, titanium disulfide or molybdenum sulfide. The chalcogen ghost is, for example, niobium selenide. The conductive polymer is, for example, sulfur, polyaniline or polythiophene.

The positive electrode active material contains a positive electrode active material particle powder. The surface of the positive electrode active material particles may be coated with a coating agent. Here, the coating is not limited to the whole surface of the positive electrode active material particles, and it may be applied to a part of the surface of the positive electrode active material particles. The coating agent is, for example, at least one of the solid electrolyte or the conductive agent. The surface of the positive electrode active material particles is coated with a coating agent, whereby the interface resistance between the positive electrode active material and the solid electrolyte can be reduced. Since collapse of the structure of the positive electrode active material can be suppressed, the sweep potential amplitude is extended, and a large amount of lithium can be used for reactions and cycle characteristics can also be improved. Preferably, the positive electrode active material contains positive electrode active material particles having a particle size of 2 micrometers or less (hereinafter appropriately referred to as "positive electrode active material particles having a small particle size"). This is because the discharge capacity is further improved, and the resistance of the positive electrode 11 can be further reduced. The particle size of the positive electrode active material particles is calculated in the following manner. A cross-sectional SEM image of the positive electrode 11 is photographed using a field emission scanning electron microscope (FE-SEM) and the particle size of the positive electrode active material particles is calculated from the cross-sectional SEM image. Note that a more specific method of calculating the particle size will be described below.

The positive electrode active material particles having a small particle size is preferably dispersed in the positive electrode 11 as the positive electrode active material layer. This is because the dispersed positive electrode active material particles having a small particle size form a path of lithium ions in the positive electrode 11 and the ionic conductivity in the positive electrode 11 is improved.

The positive electrode active material may contain only positive electrode active material particles having a small particle size. Taking into consideration the fact that advantages to be described below are obtained, it is preferable to contain both the positive electrode active material particles having a small particle size and positive electrode active material particles having a particle size of more than 2 micrometers (hereinafter, appropriately referred to as "positive electrode active material particles having a large particle size").

In the case where the positive electrode active material contains both the positive electrode active material particles having a small particle size and the positive electrode active material particles having a large particle size, the ratio of an inactive binder can be electrochemically reduced while maintaining the film strength of the positive electrode 11. Therefore, a balance between an improvement of ionic conduction and an increase in the ratio of the positive electrode active material in the positive electrode 11 (an increase in the capacity) is achieved.

As will hereinafter be described, the film thickness of the solid electrolyte layer 13 is preferably 20 micrometers or less from the viewpoint of improving the volume energy density of the battery. However, in this case, when the positive electrode 11 includes only the positive electrode active material particles having a large particle size (e.g., only positive electrode active material particles having a particle size of about 20 micrometers), the surface roughness of the positive electrode 11 increases and a short circuit between the positive electrode 11 and the negative electrode 12 may occur.

On the other hand, in the case where the positive electrode 11 includes both the positive electrode active material particles having a small particle size and the positive electrode active material particles having a large particle size, the positive electrode 11 can be made smooth and thus the short circuit between the positive electrode 11 and the negative electrode 12 is suppressed.

In the case where the positive electrode active material contains only the positive electrode active material particles having a small particle size, although the ionic conduction in the positive electrode 11 can be improved, a side reaction occurs because the surface area of the positive electrode active material particles having a small particle size is large, which may result in an irreversible capacity. On the other hand, in the case where the positive electrode active material contains both positive electrode active material particles having a small particle size and a large surface area and positive electrode active material particles having a large particle size and a relatively small surface area, the irreversible capacity can be reduced.

In the case where the positive electrode active material contains both the positive electrode active material particles having a small particle size and the positive electrode active material particles having a large particle size, the positive electrode 11 as the positive electrode active material layer is densified and the film strength is improved. Further, the positive electrode active material particles having a large particle size is present in the positive electrode 11 as the positive electrode active material layer, whereby the film thickness of the positive electrode 11 is easily increased.

The process of determining whether the positive electrode active material contains the positive electrode active material particles having a small particle size or contains both the positive electrode active material particles having a small particle size and the positive electrode active material particles having a large particle size can be performed in the following manner. First, the cross-section of the produced positive electrode 11 is cut out and an SEM image of the cross-section is photographed using a field emission scanning electron microscope (FE-SEM). Subsequently, ten of the positive electrode active material particles are randomly selected from the SEM image using image analysis software and an area S of each particle is calculated. Then, the positive electrode active material particles are assumed to be spherical and a particle size (a diameter) R of each of the positive electrode active material particles is calculated from the following equation:

$$R = 2 * (S/pi)^{1/2}$$

The process of calculating the particle size is performed on ten SEM images. The particle size distribution of the positive electrode active material is calculated from the particle size of the $10 * 10$ number of positive electrode active material particles. Subsequently, based on the particle size distribution, the process of determining whether the positive electrode active material contains the positive electrode active material particles having a small particle size or contains both the positive electrode active material particles having a small particle size and the positive electrode active material particles having a large particle size is performed. Hereinafter, the determination method is referred to as a "method of determining the particle size".

Preferably, the positive electrode active material contains both first positive electrode active material particles having the first particle size distribution and second positive electrode active material particles having the second particle size distribution or contains only the first positive electrode active material particles. This is because the discharge capacity is further improved, and the resistance of the positive electrode 11 can be further reduced. From the viewpoint of improving the discharge capacity and reducing the resistance of the positive electrode 11, preferably, the mode diameter of the first particle size distribution is 2 micrometers or less and the mode diameter of the second particle size distribution is more than 2 micrometers and 20 micrometers or less. More preferably, the mode diameter of the first particle size distribution is 2 micrometers or less and the mode diameter of the second particle size distribution is more than 2 micrometers and 10 micrometers or less. Still more preferably, the mode diameter of the first particle size distribution is 2 micrometers or less and the mode diameter of the second particle size distribution is more than 2 micrometers and 5 micrometers or less.

The process of determining whether the positive electrode active material contains both the first and second positive electrode active material particles or contains only the first positive electrode active material particles can be performed in the following manner. First, the particle size distribution of the positive electrode active material is calculated, similarly to the method of determining the particle size. Next, based on the particle size distribution, the process of determining whether the positive electrode active material contains both the first and second positive electrode active material particles or contains only the first positive electrode active material particles is performed. Note that the mode diameter is calculated as a peak value of the particle size distribution.

A ratio $(M1/(M1 + M2)) * 100)$ of a blending amount M1 of the first positive electrode active material particles to a total amount $(M1 + M2)$ of a blending amount M1 of the first positive electrode active material particles and a blending amount M2 of the second positive electrode active material particles is in the range of 20% by mass to 100% by mass, for example.

For example, a carbon material, metal, a metal oxide or a conductive polymer may be included singularly, or two or more kinds thereof may be included in the conductive agent. The carbon material is, for example, graphite, carbon black, acetylene black, ketjen black or carbon fiber. The metal oxide is, for example, $SnO_2$. Note that the conductive agent may be a material having conductivity, and is not limited to the above examples.

The binder includes an inorganic binder that can be sintered at 600 degrees C or less. The inorganic binder includes at least one kind of an amorphous inorganic binder or a crystalline inorganic binder. More specifically, the binder includes at least one kind of an amorphous inorganic binder having a glass transition point of 600 degrees C or less or a crystalline inorganic binder that can be sintered at 600 degrees C or less. The amorphous inorganic binder may be either an amorphous inorganic binder containing lithium or an amorphous inorganic binder containing no lithium as long as the glass transition point is 600 degrees C or less. From the viewpoint of improving the discharge capacity, the former is preferred. The crystalline inorganic binder may be either a crystalline inorganic binder containing lithium or a crystalline inorganic binder containing no lithium as long as the crystalline inorganic binder can be sintered at 600 degrees C or less. From the viewpoint of improving the discharge capacity, the former is preferred. The crystalline inorganic binder may be glass ceramics containing a mixture of both the amorphous inorganic binder and the crystalline inorganic binder.

As the inorganic binder, either an inorganic binder having ionic conductivity and/or electronic conductivity or an inorganic binder not having ionic conductivity and/or electronic conductivity may be used. Note that in the case where an inorganic binder having ionic conductivity and/or electronic conductivity is used as the inorganic binder, an inorganic binder having ionic conductivity and/or electronic conductivity higher than that of the positive electrode active material or an inorganic binder having ionic conductivity and/or electronic conductivity lower than that of the positive electrode active material may be used as the inorganic binder.

The binder is sintered. Here, the sintering may be either solid phase sintering or liquid phase sintering. When the binder is sintered, the positive electrode 11 has a sufficient film strength and the shape of the positive electrode 11 is maintained. In the positive electrode 11 including the sintered binder, it is preferable that even when a tape peeling test is performed, no peeling is observed in the positive electrode 11, and the positive electrode active material particle powder is hardly dropped. Further, the binder is sintered, whereby the discharge capacity is improved and the resistance value can be reduced.

The process of determining whether the binder is the inorganic binder that can be sintered at 600 degrees C or less can be performed in the following manner. That is, the inorganic binder is formed into a pellet shape and calcined to about 600 degrees C, and then the tape peeling test or a pencil hardness scratch test is performed thereon. On the basis of the test results, the process of determining whether the inorganic binder is sintered is performed. Alternatively, the pellets before and after calcination may be observed with the FE-SEM to determine whether the binder is the inorganic binder that can be sintered at 600 degrees C or less.

It is possible to determine whether the binder is the amorphous inorganic binder or the crystalline inorganic binder, for example, by performing the elemental analysis of the binder, using a scanning electron microscope in combination with energy dispersive X-ray spectroscopy (EDX) and detecting components contained in the amorphous inorganic binder (e.g., components such as B, Si, P, and Bi). Further, it is possible to determine it by performing the elemental analysis of the binder using an analytical method such as Inductively-coupled plasma optical emission spectroscopy (ICP-AES), Raman analysis or X-ray photoelectron spectroscopy (XPS). Further, when heating to near 600 degrees C "shrinkage" is observed by the compressive load measurement (thermo mechanical analysis (TMA)). Thus, the presence or absence of the sintered binder can be determined.

For example, the amorphous inorganic binder includes an oxide of at least one kind of element selected from the group including bismuth (Bi), zinc (Zn), boron (B), silicon (Si), vanadium (V), and phosphorus (P), and further it may include an oxide of another element R, if necessary. Further, the amorphous inorganic binder includes an oxide of at least one kind of element selected from the group including bismuth (Bi), zinc (Zn), boron (B), silicon (Si), and phosphorus (P), and further it may include an oxide of another element R, if necessary. Another element R is, for example, an alkali metal or an alkali earth metal element. The alkali metal element is, for example, lithium (Li), sodium (Na) or potassium (K). The alkali earth metal element is, for example, calcium (Ca), strontium (Sr) or barium (Ba).

More specifically, for example, $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$-$R_2O$, $Bi_2O_3$-$SiO_2$-$B_2O_3$, $ZnO$-$SiO_2$-$B_2O_3$-$R_2O$-$RO$, $ZnO$-$SiO_2$-$B_2O_3$-$RO$, $ZnO$-$SiO_2$-$B_2O_3$, $V_2O_5$-$P_2O_5$-$RO$, $R_2O$-$SiO_2$-$B_2O_3$, $R_2O$-$SiO_2$, $R_2O$-$B_2O_3$, $R_2O$-$SiO_2$-$P_2O_5$, $R_2O$-$P_2O_5$, $R_2O_4$, $R_2BO_3$ or $RNbO_3$ may be included singularly, or two or more kinds thereof may be included in the amorphous inorganic binder. In this regard, R represents an alkali metal element. Note that the amorphous inorganic binder is not limited to the above oxides.

The weight ratio (A : B) of a positive electrode active material A and a binder B is in the range of 25 : 75 to 99.9 : 0.1, preferably in the range of 25 : 75 to 90 : 10, more preferably in the range of 25 : 75 to 81 : 19, still more preferably in the range of 25 : 75 to 75 : 25. Note that the weight ratio ranges include the upper and the lower limit values. The weight ratios are set to the above ranges so that the strength of the positive electrode 11 can be maintained and the discharge capacity can be improved.

**EP 3 140 877 B1**

From the viewpoint of further improving the discharge capacity, the weight ratio (A : B) of the positive electrode active material A and the binder B is preferably in the range of 33 : 67 to 99.9 : 0.1, more preferably in the range of 50 : 50 to 99.9 : 0.1, still more preferably in the range of 67 : 33 to 99.9 : 0.1. From the viewpoint of improving the volume energy density, the weight ratio (A : B) of the positive electrode active material A and the binder B is preferably in the range of 80 : 20 to 99.9 : 0.1. Note that the weight ratio ranges include the upper and the lower limit values.

The binder is present in a space between the positive electrode active material particles. The binder contains a binder particle powder. The positive electrode active material particles are bonded to each other by a sintered binder particle group, i.e., a sintered body. The binder particles may be applied to the whole surface of the positive electrode active material particles or may be partially present on the surface. Examples of the form of partial presence include the dotted presence.

(Negative Electrode)

A negative electrode 12 is a negative electrode active material layer that includes one or two or more kinds of negative electrode active materials and a binder. The negative electrode 12 may include a material such as a conductive agent, if necessary.

The negative electrode active material is a negative electrode material capable of absorbing and releasing lithium ions as an electrode reaction substance. The negative electrode material is preferably a carbon material or a metallic material from the viewpoint of a high energy density, however, it is not limited thereto.

The carbon material is, for example, graphitizable carbon, non-graphitizable carbon, graphite, meso-carbon micro beads (MCMB) or highly-orientated graphite (HOPG). In this regard, the carbon material may be a material capable of absorbing and releasing lithium ions and is not particularly limited to the above materials. Examples of graphite include spherical graphite such as spherical natural graphite or spherical artificial graphite and scale-shaped graphite. From the viewpoint of obtaining more stable battery performance, it is preferable to use both the spherical graphite and the scale-shaped graphite as the graphite.

The metallic material is, for example, a metallic element capable of forming an alloy with lithium or a material containing a metalloid element as the constituent element. More specifically, the metallic material is, for example, one kind or two or more kinds of any of a simple substance, an alloy or a compound, such as silicon (Si), tin (Sn), aluminum (Al), indium (In), magnesium (Mg), boron (B), gallium (Ga), germanium (Ge), lead (Pb), bismuth (Bi), cadmium (Cd), silver (Ag), zinc (Zn), hafnium (Hf), zirconium (Zr), yttrium (Y), palladium (Pd) or platinum (Pt). In this regard, the simple substance is not limited to only a simple substance having a purity of 100% and may contain a small amount of impurities. The metallic material is, for example, Si, Sn, $SiB_4$, $TiSi_2$, SiC, $Si_3N_4$, $SiO_v$ (0 < v ≦ 2), LiSiO, $SnO_w$ (0 < w ≦ 2), $SnSiO_3$, LiSnO or $Mg_2Sn$.

In addition, the metallic material may be a lithium-containing compound or lithium metal (a simple substance of lithium). The lithium-containing compound is a composite oxide (a lithium-transition-metal composite oxide) containing lithium and a transition metal element as constituent elements, and is, for example, $Li_4Ti_5O_{12}$.

The negative electrode active material contains a negative electrode active material particle powder. The surface of the negative electrode active material particles may be coated with a coating agent. Here, the coating is not limited to the whole surface of the negative electrode active material particles, and it may be applied to a part of the surface of the negative electrode active material particles. The coating agent is, for example, at least one of a solid electrolyte or a conductive agent. The surface of the negative electrode active material particles is coated with a coating agent, whereby the interface resistance between the negative electrode active material and the solid electrolyte can be reduced. Since collapse of the structure of the negative electrode active material can be suppressed, the sweep potential amplitude is extended, and a large amount of lithium can be used for reactions and cycle characteristics can also be improved.

In the case where spherical negative electrode active material particles (e.g. spherical graphite) are used as the negative electrode active material, the average particle size of the negative electrode active material particles is preferably 10 micrometers or less, from the viewpoint of the film thickness of the negative electrode and the roughness reduction. Note that the average particle size can be calculated in the following manner. First, the cross-section of the produced negative electrode 12 is cut out and an SEM image of the cross-section is photographed using the FE-SEM. Subsequently, ten of the negative electrode active material particles are randomly selected from the SEM image using image analysis software and an area S of each particle is calculated. Then, the negative electrode active material particles are assumed to be spherical and a particle size (a diameter) R of each of the negative electrode active material particles is calculated from the following equation:

$$R = 2 * (S/pi)^{1/2}$$

The process of calculating the particle size is performed on ten SEM images. The particle sizes of the 10 * 10 number of negative electrode active material particles were simply averaged (arithmetic means were obtained) to calculate an average particle size.

The conductive agent is the same as the conductive agent in the positive electrode 11 as described above. The binder is the same as the binder in the positive electrode 11 as described above. The weight ratio (A : B) of the negative electrode active material A and the binder B which are contained in the negative electrode 12 is the same as the weight ratio (A : B) of the positive electrode active material A and the binder B which are contained in the positive electrode 11.

Since the negative electrode 12 has a potential lower than that of the positive electrode 11, it is preferable to use a binder which is stable at a low potential and does not absorb Li as the binder for the negative electrode 12. As such a binder, it is preferable to use an oxide containing Li, Si, and B, an oxide containing Li, P, and Si or the like. Specifically, it is preferable to use $Li_2O$-$SiO_2$-$B_2O_3$, $Li_2O$-$P_2O_5$-$SiO_2$ or the like.

(Solid Electrolyte Layer)

The solid electrolyte layer 13 is, for example, a sintered body of solid electrolyte powder. The solid electrolyte layer 13 contains one kind or two or more kinds of the crystalline solid electrolytes. The kind of crystalline solid electrolyte is not particularly limited as long as it is a crystalline solid electrolyte capable of conducting lithium ions, and is, for example, an inorganic material or a polymeric material. The inorganic material is, for example, a sulfide such as $Li_2S$-$P_2S_5$, $Li_2S$-$SiS_2$-$Li_3PO_4$, $Li_7P_3S_{11}$, $Li_{3.25}Ge_{0.25}P_{0.75}S$ or $Li_{10}GeP_2S_{12}$ or an oxide such as $Li_7La_3Zr_2O_{12}$, $Li_{6.75}La_3Zr_{1.75}Nb_{0.25}O_{12}$, $Li_6BaLa_2Ta_2O_{12}$, $Li_{1+x}Al_xTi_{2-x}(PO_4)_3$ or $La_{2/3-x}Li_{3x}TiO_3$. The polymeric material is, for example, polyethylene oxide (PEO).

The solid electrolyte layer 13 may contain one kind or two kinds or more of amorphous solid electrolytes or one kind or two kinds or more of solid electrolytes containing a mixture of amorphous and crystalline solid electrolytes. The amorphous solid electrolytes and the solid electrolytes containing a mixture of amorphous and crystalline solid electrolytes contain, for example, an oxide of at least one kind of element selected from the group including bismuth (Bi), zinc (Zn), boron (B), silicon (Si), vanadium (V) and phosphorus (P); and lithium (Li). More specifically, they contain at least one kind of oxide selected from the group including $Bi_2O_3$, $ZnO$, $B_2O_3$, $SiO_2$, $V_2O_5$, and $P_2O_5$; and $Li_2O$. Specific examples of the solid electrolytes including a combination of these oxides include $Bi_2O_3$-$SiO_2$-$B_2O_3$-$Li_2O$, $Bi_2O_3$-$SiO_2$-$Li_2O$, and $ZnO$-$SiO_2$-$B_2O_3$-$Li_2O$.

The film thickness of the solid electrolyte layer 13 is preferably 20 micrometers or less from the viewpoint of improving the volume energy density of the battery. The film thickness of the solid electrolyte layer 13 is calculated in the following manner. A cross-sectional SEM image of the solid electrolyte layer 13 is photographed using FE-SEM, and the film thickness of the solid electrolyte layer 13 is calculated from the cross-sectional SEM image.

(Operation of Battery)

In this battery, for example, lithium ions released from the positive electrode 11 are incorporated into the negative electrode 12 through the solid electrolyte layer 13 during charging, and lithium ions released from the negative electrode 12 are incorporated into the positive electrode 11 through the solid electrolyte layer 13 during discharging.

(1.2 Method of Producing Battery)

Subsequently, an example of the method of producing a battery according to the first embodiment of the present technology will be described. The production method includes forming a positive electrode precursor, a negative electrode precursor, and a solid electrolyte layer precursor using a coating method, laminating these precursors, and calcining them.

(Process of Forming Positive Electrode Precursor)

A positive electrode precursor is formed in the following manner. First, a positive electrode mixture is prepared by mixing the positive electrode active material, the binder, and the conductive agent, if necessary. Then, the positive electrode mixture is dispersed in an organic solvent or the like to form a paste-like positive electrode slurry. Next, the whole surface of a predetermined supporting substrate is coated with the positive electrode slurry and dried to form a positive electrode precursor. Thereafter, the positive electrode precursor is removed from the supporting substrate. The supporting substrate is, for example, a polymeric material film such as polyethylene terephthalate (PET).

(Process of Forming Negative Electrode Precursor)

A negative electrode precursor is formed in the following manner. First, a negative electrode mixture is prepared by mixing the negative electrode active material, the binder, and the conductive agent, if necessary. Then, the negative electrode mixture is dispersed in an organic solvent or the like to form a paste-like negative electrode slurry. Next, the whole surface of a predetermined supporting substrate is coated with the negative electrode slurry and dried to form a negative electrode precursor. Thereafter, the negative electrode precursor is removed from the supporting substrate.

(Process of Forming Solid Electrolyte Layer Precursor)

A solid electrolyte layer precursor is formed in the following manner. First, an electrolyte mixture is prepared by mixing the solid electrolyte such as the crystalline solid electrolyte and the binder, if necessary. Then, the electrolyte mixture is dispersed in an organic solvent or the like to form a paste-like electrolyte slurry. Next, the whole surface of a supporting substrate is coated with the electrolyte slurry and dried to form a solid electrolyte layer precursor. Thereafter, the solid electrolyte layer precursor is removed from the supporting substrate.

At least one of the positive electrode precursor, the negative electrode precursor or the solid electrolyte layer precursor may be a ceramic green sheet (hereinafter simply referred to as "green sheet") or all the precursors may be green sheets. In this case, the thickness of the positive electrode active material layer is defined as the thickness of the positive electrode 11, and the thickness of the negative electrode material layer is defined as the thickness of the negative electrode 12.

(Processes of Laminating and Sintering Precursor)

A battery is produced in the following manner using the positive electrode precursor, negative electrode precursor, and solid electrolyte layer precursor produced in the above manner. First, the positive electrode precursor and the negative electrode precursor are laminated so as to sandwich the solid electrolyte layer precursor. Next, a laminate of the positive electrode precursor, the negative electrode precursor, and the solid electrolyte layer precursor is calcined. Thus, the binder contained in the positive electrode precursor is sintered, and the binder contained in the negative electrode precursor is sintered. As described above, a target battery is produced.

The calcination temperature of the amorphous inorganic binder is more than or equal to the glass transition point of the amorphous inorganic binder and 600 degrees C or less. When the calcination temperature is less than the glass transition point, the sintering is not progressed, the film strength of the positive electrode 11 and the negative electrode 12 is insufficient, and a decrease in the discharge capacity and an increase in the resistance may be caused. A calcination temperature of more than 600 degrees C may lead to the burning out the conductive agent such as a carbon material, a deterioration in the positive electrode active material and the negative electrode active material, and an increase in production cost of the battery.

In the case where the binder is a crystalline inorganic binder, the calcination temperature is more than or equal to a temperature that can sinter the crystalline inorganic binder, preferably more than or equal to the temperature that can sinter the crystalline inorganic binder and 600 degrees C or less. When the calcination temperature is less than the temperature that can sinter the crystalline inorganic binder, the film strength of the positive electrode 11 and the negative electrode 12 is insufficient, and a decrease in the discharge capacity and an increase in the resistance may be caused.

In the case where the binder contains both the amorphous inorganic binder and the crystalline inorganic binder, the calcination temperature is more than or equal to the highest temperature of the glass transition point of the amorphous inorganic binder and the temperature that can sinter the crystalline inorganic binder, preferably more than or equal to the temperature and 600 degrees C or less.

(1.3 Effect)

In the battery according to the first embodiment of the present technology, the ratio of the positive electrode active material to the inorganic binder is in the range of 25 : 75 to 99.9 : 0.1, whereby the discharge capacity can be improved.

The inorganic binder includes at least one kind of an amorphous inorganic binder having a glass transition point of 600 degrees C or less or a crystalline inorganic binder that can be sintered at 600 degrees C or less, whereby the calcination can be performed at a low temperature. Accordingly, it is possible to suppress damages on the positive electrode active material and the negative electrode active material calcination, prevent the conductive agent such as a carbon material from being burned out, and reduce the production cost of the battery.

The inorganic binder includes at least one kind of the amorphous inorganic binder and the crystalline inorganic binder, whereby the positive electrode precursor, the negative electrode precursor, and the solid electrolyte layer precursor can be collectively calcined at a low temperature to produce an all-solid-state battery. Therefore, the interface resistance between the positive electrode 11 and the solid electrolyte layer 13 and the interface resistance between the negative electrode 12 and the solid electrolyte layer 13 can be reduced while suppressing damages on the positive electrode 11, the negative electrode 12, and the solid electrolyte layer 13 due to calcination.

Since the positive electrode 11 and the negative electrode 12 are formed by sintering the inorganic binder, the film strength of the positive electrode 11 and the negative electrode 12 is high. Accordingly, in the case where the film thickness of the positive electrode 11 and the negative electrode 12 is increased, the battery performance can be maintained.

Since the film strength of the positive electrode 11 and the negative electrode 12 is high, the resistance values of the positive electrode 11 and the negative electrode 12 become low. Therefore, excellent rate characteristics can be obtained.

Since the film strength of the positive electrode 11 and the negative electrode 12 is high, excellent cycle characteristics can be obtained.

In the case of a battery produced by using a sulfide solid electrolyte, the battery is usually produced by coating the positive electrode surface with a solid electrolyte layer such as lithium niobate or a carbon material in order to suppress a reaction of a positive electrode active material with a solid electrolyte material (for example, refer to JP 2014-11028 A). On the other hand, in the case of the battery according to the first embodiment produced by using the inorganic binder, a decrease in the Li concentration on the surface due to a reaction of the positive electrode active material with the inorganic binder is suppressed as compared to the case where the sulfide solid electrolyte is used. Thus, in a state where the surface of the positive electrode 11 is not coated with the solid electrolyte layer, a certain high level of discharge capacity and rate characteristics are achieved. This results in an advantage of facilitating the process.

In the case where the negative electrode 12 is produced using the inorganic binder that can be sintered at 600 degrees C or less as the binder, the carbon material can be used as the negative electrode active material and this results in an improvement in the energy density.

(1.4 Modification)

In the first embodiment, an example in which the positive electrode and the negative electrode are configured to include a positive electrode active material layer and a negative electrode active material layer, respectively has been described, however, the configuration of the positive electrode and the negative electrode is not limited thereto. For example, as shown in Fig. 2, a positive electrode 21 may include a positive electrode current collector 21A and a positive electrode active material layer 21B provided on one surface of the positive electrode current collector 21A. Further, a Negative electrode 22 may include a negative electrode current collector 22A and a negative electrode active material layer 22B provided on one surface of the negative electrode current collector 22A.

The positive electrode current collector 21A contains, for example, a metal, such as aluminum (Al), nickel (Ni), iron (Fe), titanium (Ti) or stainless steel, or carbon. The positive electrode current collector 21A is, for example, in the form of foil, plate or mesh. The positive electrode active material layer 21B is the same as the positive electrode 11 in the first embodiment (the positive electrode active material layer).

The negative electrode current collector 22A contains, for example, a metal, such as copper (Cu), nickel (Ni), iron (Fe), titanium (Ti) or stainless steel, or carbon. The negative electrode current collector 22A is, for example, in the form of foil, plate or mesh. The negative electrode active material layer 22B is the same as the negative electrode 12 in the first embodiment (the negative electrode active material layer).

Note that it may be configured that one of the positive electrode and the negative electrode includes a current collector and an active material layer, and the other includes only the active material layer.

In the first embodiment, the configuration in which both the positive electrode and the negative electrode include the inorganic binder that can be sintered at 600 degrees C or less has been described, however, the configuration of a battery is not limited thereto. For example, a configuration in which one of the positive electrode and the negative electrode includes the inorganic binder that can be sintered at 600 degrees C or less may be employed.

In the first embodiment, an example in which the present technology is applied to the all-solid-state battery produced by using a solid electrolyte as an electrolyte has been described. However, the present technology is not limited to this example. The present technology may be applied to, for example, a liquid battery produced by using an electrolyte solution as an electrolyte or a gel battery produced by using a gel electrolyte as an electrolyte.

In the first embodiment, an example in which the present technology is applied to the battery produced by using lithium as an electrode reactant has been described. However, the present technology is not limited to this example. The present technology may applied to batteries produced by using other alkali metals such as sodium (Na) and potassium (K), alkaline earth metals such as magnesium (Mg) and calcium (Mg), or other metals such as aluminum (Al) and silver (Ag) as electrode reactants.

In the first embodiment, an example in which the positive electrode precursor, the negative electrode precursor, and the solid electrolyte layer precursor are formed by the coating method has been described. These layers may be produced by methods other than the coating method. As a method except the coating method, for example, a method of pressure-forming a powder of an electrode compound containing an active material and a binder or a solid electrolyte powder using a pressing machine may be used. The shape of the pressure-formed precursor is not particularly limited, and may be, for example, in the form of pellet (a coin type). Further, in the case of employing a configuration in which one of the positive electrode and the negative electrodes contains a binder and the other does not contain the binder, an electrode containing no binder may be produced by a method except the coating method such as vapor phase growth (e.g., vacuum deposition or sputtering). In this regard, it is preferable to use the coating method in order to achieve an easy formation process in an ordinary temperature environment.

In the first embodiment, an example in which the positive electrode precursor, the negative electrode precursor, and the solid electrolyte layer precursor are laminated and then the resultant laminate is calcined has been described. However, the present technology is not limited to this example. For example, the positive electrode precursor and the solid electrolyte layer precursor are laminated and then the resultant laminate may be heated. In this case, an unheated negative electrode precursor is laminated on the heated positive electrode precursor (the positive electrode 11) and solid electrolyte layer precursor (the solid electrolyte layer 13), and then the negative electrode precursor may be heated. Alternatively, a heated negative electrode precursor (the negative electrode 12) is separately prepared, the heated negative electrode precursor may be pressure-bonded to the heated positive electrode precursor and solid electrolyte layer precursor. Similarly, the negative electrode precursor and the solid electrolyte layer precursor are laminated and the resultant laminate is heated, and then an unheated positive electrode precursor is laminated thereon and the resultant laminate is heated, or the heated positive electrode precursor (the positive electrode 11) may be pressure-bonded.

In this regard, preferably, the positive electrode precursor, the negative electrode precursor, and the solid electrolyte layer precursor are laminated and then the resultant laminate is heated in order to suppress an increase in the interface resistance near the interface between the positive and negative electrode precursors and the solid electrolyte layer precursor.

<2 Second Embodiment>

In the second embodiment, a battery pack that includes the secondary battery according to the first embodiment or its modification and an electronic device will be described.

(2.1 Configuration of Electronic Device)

Hereinafter, an example of the configuration of a battery pack 300 and an electronic device 400 according to the second embodiment of the present technology will be described with reference to Fig. 3. The electronic device 400 includes an electronic circuit 401 of the electronic device main body and the battery pack 300. The battery pack 300 is electrically connected to the electronic circuit 401 through a positive electrode terminal 331a and a negative electrode terminal 331b. The electronic device 400 has a configuration which allows the battery pack 300 to be easily attached and removed by, for example, a user. Note that the configuration of the electronic device 400 is not limited thereto, and the battery pack 300 may be configured to be embedded in the electronic device 400 so that it is difficult for the user to remove the battery pack 300 from the electronic device 400.

When the battery pack 300 is charged, the positive electrode terminal 331a and the negative electrode terminal 331b in the battery pack 300 are connected to a positive electrode terminal and a negative electrode terminal in a charger (not shown), respectively. On the other hand, when the battery pack 300 is discharged (when the electronic device 400 is used), the positive electrode terminal 331a and the negative electrode terminal 331b in the battery pack 300 are connected to the positive electrode terminal and the negative electrode terminal in the electronic circuit 401, respectively.

Examples of the electronic device 400 include notebook personal computers, tablet computers, mobile phones (e.g., smart phones), personal digital assistants (PDAs), imaging apparatuses (e.g., digital still cameras and digital camcorders), audio devices (e.g., portable audio players), game consoles, cordless phone handsets, digital books, electronic dictionaries, radios, headphones, navigation systems, memory cards, pacemakers, hearing aids, illumination devices, toys, medical devices, and robots. However, they are not limited thereto.

(Electronic Circuit)

The electronic circuit 401 includes, for example, a central processing unit (CPU), a peripheral logic unit, an interface unit, and a memory unit, and controls the whole of the electronic device 400.

(Battery Pack)

The battery pack 300 includes a battery module 301 and a charge-discharge circuit 302. The battery module 301 is configured to include a plurality of secondary batteries 301a connected in series and/or in parallel. The secondary batteries 301a are connected, for example, in parallel (n) and in series (m) (n and m represent positive integers). Note that Fig. 5 shows an example in which six of the secondary batteries 301a are connected in parallel (2) and in series (3) (2P3S). As each of the secondary batteries 301a, the secondary battery according to the first embodiment or its modification is used.

During charging, the charge-discharge circuit 302 controls the charging of the battery module 301. On the other hand, during discharging (i.e., when using the electronic device 400), the charge-discharge circuit 302 controls the discharging of the electronic device 400.

(2.2 Modification)

In the second embodiment, the case where the electronic device 400 includes the battery module 301 configured to include the secondary batteries 301a has been described as an example. The electronic device 400 may be configured to include only one secondary battery 301a in place of the battery module 301.

**Examples**

Hereinafter, the present technology will be specifically described with reference to examples, however the present technology is not limited only to the examples.

The examples of the present technology will be described in the following order:

    i. Composition Ratio of Positive Electrode Active Material/Amorphous Inorganic Binder (Glass Binder)
    ii. Relationship between Electrode Film Thickness and Discharge Capacity
    iii. Discharge Rate Characteristics and Cycle Characteristics
    iv. Combination of Positive Electrode Active Materials Having Two Kinds of Particle Size Distributions
    v. Green Sheet Type Solid-State battery
    vi. Carbon Electrode

<i. Composition Ratio of Positive Electrode Active Material/Amorphous Inorganic Binder (Glass Binder)>

(Example 1)

(Process of Producing Solid Electrolyte Pellets)

First, a powder of $Li_6BaLa_2Ta_2O_{12}$ was formed into pellets having a diameter 13 mm phi, and the pellets were bonded by calcination at 1000 degrees C for 8 hours. Then, both surfaces of the pellets were ground to have a thickness of 0.3 mm. Thus, a solid electrolyte substrate was formed.

(Processes of Preparing Positive Electrode Slurry and Forming Positive Electrode)

First, the following materials were weighed, and then stirred to prepare a positive electrode slurry having a weight ratio of a positive electrode active material and a glass binder containing Li (the positive electrode active material: the glass binder) of 50 : 50.

    Positive electrode active material: $LiCoO_2$ 3 g
    Glass binder containing Li (amorphous inorganic binder) : $Li_2O\text{-}SiO_2\text{-}B_2O_3$ 3 g
    Thickener: acrylic binder 1.07 g
    Solvent: terpineol 6.25 g

Subsequently, the prepared positive electrode slurry was applied onto the solid electrolyte substrate by screen printing so as to have a size of 6 mm phi. The resultant substrate was dried at 100 degrees C and calcined at 420 degrees C for 10 minutes to form a 3 micrometers thick positive electrode.

(Process of Fabricating All-Solid-State Battery)

First, a thin Pt film as a collector layer was formed on the positive electrode by sputtering. Then, an Al foil was attached to the thin Pt film. Next, a metal Li/Cu foil was attached to the opposite surface of the positive electrode, and a pressure of 200 MPa was applied onto the surface by cold isostatic press to form a negative electrode. As described above, a target battery (an all-solid-state lithium ion secondary battery) was produced.

(Example 2)

A battery was produced in the same manner as Example 1 except that the positive electrode active material and the glass binder were mixed at a weight ratio of 33 : 67 (the positive electrode active material: the glass binder).

(Example 3)

A battery was produced in the same manner as Example 1 except that the positive electrode active material and the glass binder were mixed at a weight ratio of 67 : 33 (the positive electrode active material: the glass binder).

(Example 4)

A battery was produced in the same manner as Example 1 except that the positive electrode active material and the glass binder were mixed at a weight ratio of 80 : 20 (the positive electrode active material: the glass binder).

(Example 5)

A battery was produced in the same manner as Example 1 except that $Bi_2O_3$-$B_2O_3$-ZnO (i.e., a glass binder containing no Li) was used as the glass binder.

(Comparative Example 1)

A battery was produced in the same manner as Example 1 except that the positive electrode active material and the glass binder were mixed at a weight ratio of 9 : 91 (the positive electrode active material: the glass binder).

(Comparative Example 2)

A battery was produced in the same manner as Example 1 except that a positive electrode slurry was prepared without adding the positive electrode active material.

(Comparative Example 3)

A battery was produced in the same manner as Example 1 except that $Li_{1.5}Al_{0.5}Ge_{1.5}(PO_4)_3$ having a glass transition point of more than 600 degrees C was used as the glass binder.

(Comparative Example 4)

A battery was produced in the same manner as Comparative example 3 except that the calcination temperature was set to 600 degrees C.

(Comparative Example 5)

A battery was produced in the same manner as Example 1 except that the calcination temperature was set to 200 degrees C.

(Evaluation)

Batteries of Examples 1 to 5 and Comparative examples 1 to 5 produced in the above manner were subjected to the following evaluation.

(Film Strength)

The tape peeling test was performed on the positive electrode surface of each battery and the film strength was evaluated by the following standards. The results are shown in Table 1.

Excellent film strength: no peeling is observed in the positive electrode, and the positive electrode active material particle powder is hardly dropped.

Insufficient film strength: the positive electrode is peeled, or the positive electrode active material particle powder is dropped.

(Discharge Characteristics)

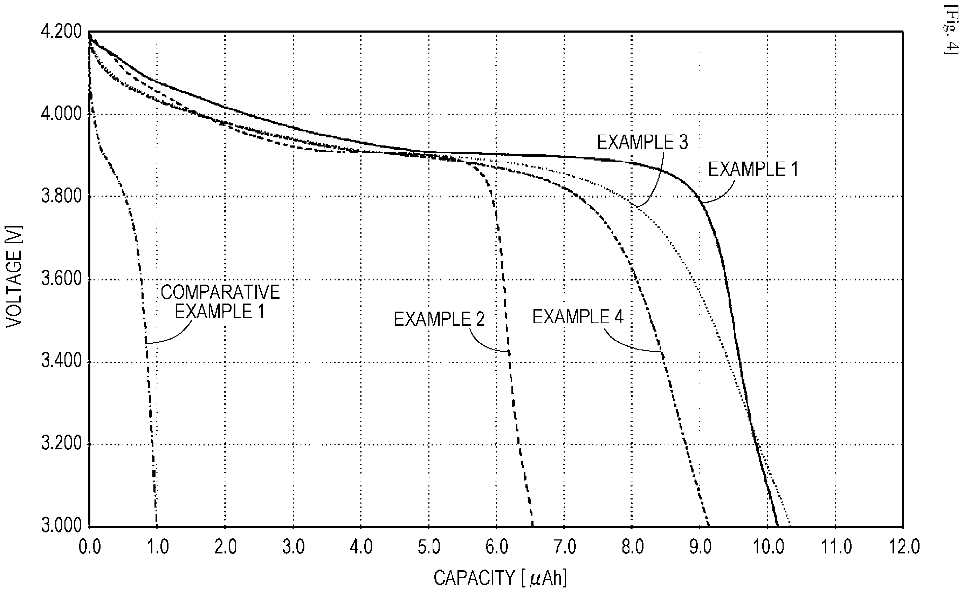

Battery charge-discharge cycles were performed under the following conditions, and the discharge curve and the discharge capacity were determined. The results are shown in Fig. 4 and Table 1.

Measurement environmental conditions: in a dry air atmosphere at 25 degrees C
Charge-discharge conditions: in a constant current mode of 0.1 micro A at a cutoff voltage of 4.2 V/3V

(Resistance Value)

The resistance value of the battery in a frequency domain of $10^6$ to 1 Hz (amplitude: 10 mV) was calculated using the Solartron analyzer. The results are shown in Table 1.

Table 1 shows the amounts of binders, discharge capacities, and resistance values of the batteries of Examples 1 to 5 and Comparative examples 1 to 5.

[Table 1]

| | Kind of binder | Weight ratio (positive electrode active material : binder) | Drying temperature degrees (degrees C) | Calcination temperature degrees (degrees C) | Discharge capacity ($\mu$Ah) | Resistance value (ohms) | Film strength |
|---|---|---|---|---|---|---|---|
| Example 1 | $Li_2O\text{-}SiO_2\text{-}B_2O_3$ | 50 : 50 | 100 | 420 | 10.2 | 37091 | Excellent |
| Example 2 | $Li_2O\text{-}SiO_2\text{-}B_2O_3$ | 33 : 67 | 100 | 420 | 6.5 | 37021 | Excellent |
| Example 3 | $Li_2O\text{-}SiO_2\text{-}B_2O_3$ | 67 : 33 | 100 | 420 | 10.3 | 37468 | Excellent |
| Example 4 | $Li_2O\text{-}SiO_2\text{-}B_2O_3$ | 80 : 20 | 100 | 420 | 9.1 | 38068 | Excellent |
| Example 5 | $Bi_2O_3\text{-}B_2O_3\text{-}ZnO$ | 50 : 50 | 100 | 420 | 5.5 | 38945 | Excellent |
| Comparative example 1 | $Li_2O\text{-}SiO_2\text{-}B_2O_3$ | 9 : 91 | 100 | 420 | 1.0 | 145820 | Excellent |
| Comparative example 2 | $Li_2O\text{-}SiO_2\text{-}B_2O_3$ | 0 : 100 | 100 | 420 | - | 609240 | Excellent |
| Comparative example 3 | $Li_{1.5}Al_{0.5}Ge_{1.5}(PO_4)_3$ | 50 : 50 | 100 | 420 | - | - | Insufficient |
| Comparative example 4 | $Li_{1.4}Al_{0.5}Ge_{1.5}(PO_4)_3$ | 50 : 50 | 100 | 600 | - | - | Insufficient |
| Comparative example 5 | $Li_2O\text{-}SiO_2\text{-}B_2O_3$ | 50 : 50 | 100 | 200 | 0.02 | - | Insufficient |

Note that the description of the evaluation results in Table 1 was omitted because the discharge capacity was significantly reduced and the resistance value was significantly increased, or the discharge capacity and the resistance value were not able to be measured in the batteries of Comparative examples 3 to 5 in which the film strength of the positive electrode was insufficient.

The followings are found from Fig. 4 and Table 1.

In Comparative example 1 in which the weight ratio of the positive electrode active material to the glass binder is 9 : 91, the resistance value is very high and the IR drop is large, as compared to Examples 1 to 4 in which the weight ratio is from 33 : 67 to 80 : 20.

In Examples 1 and 3 in which the weight ratio of the positive electrode active material to the glass binder is 50 : 50 or 67 : 33, almost the same discharge capacities are obtained. In Example 2 in which the weight ratio of the positive electrode active material is 33 : 67, which is smaller than that of Example 1, the discharge capacity tends to decrease, compared to that of Example 1.

In Example 4 in which the weight ratio of the positive electrode active material is 80 : 20, which is larger than that of Example 3, the discharge capacity tends to decrease, compared to that of Example 3.

Therefore, a value range suitable for obtaining an excellent discharge capacity is assumed to be present in the weight ratio of the positive electrode active material to the glass binder.

In Comparative example 1 in which the weight ratio of the positive electrode active material to the glass binder is 9 : 91, the discharge capacity is about half of the theoretical capacity.

In Example 2 in which the weight ratio of the positive electrode active material to the glass binder is 33 : 67, the resistance value is the lowest. When the weight ratio of the binder is increased on the basis of a weight ratio of 33 : 67 (Example 2), the resistance value tends to increase. This is assumed to be due to the periodic resistance at the interface between the electrode and the solid electrolyte. On the other hand, even when the weight ratio of the positive electrode active material is increased on the basis of a weight ratio of 33 : 67 (Example 2), the resistance value tends to increase. This is assumed to be due to the fact that when the ratio of the binder decreases, the gaps in the electrode increases, and the interface resistance becomes high. Therefore, a value range suitable for decreasing the resistance value is assumed to be present in the weight ratio of the positive electrode active material to the glass binder.

In Example 5 in which the glass binder containing no Li was used, a discharge capacity of 5.5 micro Ah is obtained. In this regard, in Example 1 in which the glass binder containing Li was used, the discharge capacity is higher than that in Example 5 in which the glass binder containing no Li was used.

In Comparative examples 3 and 4 in which the glass binder different from that of Example 1 was used, the film strength is insufficient. This is because the glass transition point of $Li_{1.5}Al_{0.5}Ge_{1.5}(PO_4)_3$ used as the glass binder in Comparative examples 3 and 4 is more than 600 degrees C, and thus the glass binder is not sintered. In Comparative example 5, the same glass binder as Example 1 is used, but the film strength is insufficient. This is because the calcination temperature is 200 degrees C in Comparative example 5, and thus the sintering of the glass binder is not progressed.

<ii. Relationship between Electrode Film Thickness and Discharge Capacity>

(Examples 6 to 9)

Batteries were produced in the same manner as Example 1 except that the film thickness of each positive electrode was changed as shown in Table 2 by repeating the process of applying the positive electrode slurry by screen printing and the process of drying at 100 degrees C.

(Discharge Capacity)

Battery charge-discharge cycles were performed under the following conditions, and the discharge capacity (discharge capacity per unit mass : weight energy density) was determined. The results are shown in Table 2.

Measurement environmental conditions: in a dry air atmosphere at 25 degrees C
Charge-discharge conditions: in a constant current mode of 1 micro A at a cutoff voltage of 4.2 V/3V

Table 2 shows the film thickness and discharge capacity (discharge capacity per unit mass : weight energy density) of the positive electrodes of the batteries of Examples 6 to 9.

[Table 2]

|  | Film thickness of positive electrode (μm) | Amount of discharge (mAh/g) |
|---|---|---|
| Example 6 | 2.3 | 119.5 |

(continued)

|  | Film thickness of positive electrode ($\mu$m) | Amount of discharge (mAh/g) |
| --- | --- | --- |
| Example 7 | 5.3 | 121.0 |
| Example 8 | 6.7 | 134.0 |
| Example 9 | 14.4 | 130.6 |

Table 2 indicates that the glass binder is sintered to produce a positive electrode, whereby the film strength of the positive electrode is increased, and the battery performance can be maintained even when the film thickness of the positive electrode is increased.

<iii. Discharge Rate Characteristics and Cycle Characteristics>

(Example 10)

A battery was produced in the same manner as Example 1 except that a solid electrolyte substrate was formed using a powder of $Li_{6.75}La_3Zr_{1.75}Nb_{0.25}O_{12}$.

(Charge-Discharge Rate Characteristics)

Battery charge-discharge cycles were performed under the following conditions, and charge-discharge rate characteristics were evaluated. The results are shown in Table 3.

Measurement environmental conditions: in a dry air atmosphere at 25 degrees C
Charge-discharge conditions: in a constant current mode of 0.1 C to 0.7 C (1 micro A to 7 micro A) at a cutoff voltage of 4.2 V/3V

Table 3 shows the evaluation results of discharge rate characteristics of the battery of Example 10.

[Table 3]

|  | Discharge rate (C) | Discharge capacity (mAh/g) |
| --- | --- | --- |
| Example 10 | 0.1 | 116.5 |
|  | 0.2 | 104.2 |
|  | 0.3 | 95.0 |
|  | 0.4 | 88.5 |
|  | 0.5 | 86.4 |
|  | 0.6 | 86.0 |
|  | 0.7 | 81.5 |

Table 3 indicates that the glass binder is sintered to produce a positive electrode, whereby the film strength of the positive electrode is increased and the resistance value of the positive electrode is decreased, and therefore excellent discharge rate characteristics are obtained. In the present evaluation, it is recognized that the discharging can be performed up to a discharge rate of 0.7 C.

(Cycle Characteristics)

Battery charge-discharge cycles were repeated 1000 times under the following conditions and the cycle characteristics were evaluated. The results are shown in Table 4.

Measurement environmental conditions: in a dry air atmosphere at 25 degrees C
Charge-discharge conditions: in a constant current mode of 0.3 C (3 micro A) at a cutoff voltage of 4.2 V/3V

Table 4 shows the evaluation results of cycle characteristics of the battery of Example 10.

[Table 4]

|  | Charge capacity (mAh/g) | Charge maintenance rate (%) | Discharge capacity (mAh/g) | Discharge maintenance rate (%) |
|---|---|---|---|---|
| Example 10 | 74.8 | 77.8 | 74.9 | 78.2 |

Table 4 indicates that the glass binder is sintered to produce a positive electrode, whereby the film strength of the positive electrode is increased and excellent cycle characteristics are obtained.

<iv. Combination of Positive Electrode Active Materials Having Two Kinds of Particle Size Distributions>

In this example, the mode diameter of the positive electrode active material is calculated in the following manner. First, the particle size distribution of the positive electrode active material was calculated, similarly to the method of determining the particle size in the first embodiment. Next, the mode diameter was calculated from the particle size distribution. Specifically, in the case where one kind of particle size distribution was identified as the particle size distribution of the positive electrode active material, a peak value of this particle size distribution was calculated as the mode diameter. On the other hand, in the case where two kinds of particle size distributions were identified as the particle size distribution of the positive electrode active material, peak values of the particle size distributions were calculated as mode diameters.

In Examples 11 to 15 below, the positive electrode active material as a ground product corresponds to the first positive electrode active material (refer to "the first embodiment") which has the particle size distribution having a mode diameter (a peak value) of 2 micrometers or less. On the other hand, in Examples 11 to 15 below, the positive electrode active material as a non-ground product corresponds to the second positive electrode active material (refer to "the first embodiment") which has the particle size distribution having a mode diameter (a peak value) of more than 2 micrometers.

In Example 16 below, positive electrode active materials having two kinds of particle size distributions are ground products. One of the positive electrode active materials having two kinds of particle size distributions (ground products), which has the particle size distribution having a mode diameter (a peak value) of 2 micrometers or less, corresponds to the first positive electrode active material (refer to the "first embodiment"). On the other hand, the other which has the particle size distribution having a mode diameter (a peak value) of more than 2 micrometers corresponds to the second positive electrode active material (refer to the "first embodiment").

(Example 11)

(Process of Producing Solid Electrolyte Pellets)

First, a powder of $Li_6BaLa_2Ta_2O_{12}$ was formed into pellets having a diameter 13 mm phi, and the pellets were bonded by calcination at 1000 degrees C for 8 hours. Then, both surfaces of the pellets were ground to have a thickness of 0.3 mm.

Thus, a solid electrolyte substrate was formed.

(Processes of Preparing Positive Electrode Slurry and Forming Positive Electrode)

First, the following materials were weighed, and then stirred to prepare a positive electrode slurry having a weight ratio of a positive electrode active material and a glass binder containing Li (the positive electrode active material: the glass binder) of 50 : 50.

Positive electrode active material: a ground product of $LiCoO_2$ (manufactured by Aldrich) (mode diameter: 0.65 micrometers) 3 g
Glass binder containing Li (an amorphous inorganic binder): $Li_2O$-$SiO_2$-$B_2O_3$ 3 g
Thickener: acrylic binder 1.07 g
Solvent: terpineol 6.25 g

Subsequently, the prepared positive electrode slurry was applied onto the solid electrolyte substrate by screen printing so as to have a size of 6 mm phi. The resultant substrate was dried at 100 degrees C and calcined at 420 degrees C for 10 minutes to form a 3 micrometers thick positive electrode.

(Process of Fabricating All-Solid-State Battery)

First, a thin Pt film as a collector layer was formed on the positive electrode by sputtering. Then, an Al foil was attached to the thin Pt film. Next, a metal Li/Cu foil was attached to the opposite surface of the positive electrode, and a pressure of 200 MPa was applied onto the surface by cold isostatic press to form a negative electrode. As described above, a target battery (an all-solid-state lithium ion secondary battery) was produced.

(Example 12)

A battery was produced in the same manner as Example 11 except that, in the process of preparing a positive electrode slurry, 2.25 g of a ground product (mode diameter: 0.65 micrometers) of $LiCoO_2$ (manufactured by Aldrich) and 0.75 g of a non-ground product (mode diameter: 14.05 micrometers) were used as the positive electrode active materials.

(Example 13)

A battery was produced in the same manner as Example 11 except that, in the process of preparing a positive electrode slurry, 1.5 g of a ground product (mode diameter: 0.65 micrometers) of $LiCoO_2$ (manufactured by Aldrich) and 1.5 g of a non-ground product (mode diameter: 14.05 micrometers) were used as the positive electrode active materials.

(Example 14)

A battery was produced in the same manner as Example 11 except that, in the process of preparing a positive electrode slurry, 0.75 g of a ground product (mode diameter: 0.65 micrometers) of $LiCoO_2$ (manufactured by Aldrich) and 2.25 g of a non-ground product (mode diameter: 14.05 micrometers) were used as the positive electrode active materials.

(Example 15)

A battery was produced in the same manner as Example 11 except that, in the process of preparing a positive electrode slurry, 3 g of a non-ground product (mode diameter: 14.05 micrometers) of $LiCoO_2$ (manufactured by Aldrich) was used as the positive electrode active material.

(Example 16)

A battery was produced in the same manner as Example 11 except that, in the process of preparing a positive electrode slurry, the following materials were weighed, and then stirred to prepare a positive electrode slurry having a weight ratio of a positive electrode active material and a glass binder containing Li (the positive electrode active material: the glass binder) of 80 : 20.

> Positive electrode active material: a ground product of $LiCoO_2$ (manufactured by Aldrich) (mode diameter: 0.65 micrometers) 0.5 g
> Ground product of $LiCoO_2$ (manufactured by Aldrich) (mode diameter: 5 micrometers) 2 g
> Glass binder containing Li (amorphous inorganic binder) : $Li_2O$-$SiO_2$-$B_2O_3$ 0.625 g
> Thickener: acrylic binder 1.07 g
> Solvent: terpineol 6.25 g

(Evaluation)

Batteries of Examples 11 to 16 produced in the above manner were subjected to the following evaluation.

(Volume Energy Density)

First, battery charge-discharge cycles were performed under the following conditions, and the discharge capacity was determined. Subsequently, the volume energy density was calculated using the discharge capacity. The results are shown in Table 5.

Measurement environmental conditions: in a dry air atmosphere at 25 degrees C
Charge-discharge conditions: in a constant current mode of 1 micro A at a cutoff voltage of 4.2 V/3V

(Resistance value)

The resistance value of the battery in a frequency domain of $10^6$ to 1 Hz (amplitude: 10 mV) was calculated using the Solartron analyzer. The results are shown in Table 5.

Table 5 shows the particle size distributions, blending ratios, volume energy density, and resistance values of the positive electrode active materials of the batteries of Examples 11 to 15.

[Table 5]

|  | Particle size distribution | ratio of ground product (% by mass) | Blending ratio R2 of non-ground product (% by mass) | Volume energy density (mAh / cm$^3$) | Resistance value (ohms) |
|---|---|---|---|---|---|
| Example 11 | One kind | 100 | 0 | 130.6 | 63921 |
| Example 12 | Two kinds | 75 | 25 | 130.5 | 73047 |
| Example 13 | Two kinds | 50 | 50 | 130.4 | 95882 |
| Example 14 | Two kinds | 25 | 75 | 126.4 | 96879 |
| Example 15 | One kind | 0 | 100 | 6.9 | 894894 |

Note that a blending ratio R1 of a ground product and a blending ratio R2 of a non-ground product, shown in Table 5, are defined by the following equations:

$$\text{Blending ratio R1 (\% by mass) of ground product} = (M1/(M1 + M2)) * 100$$

$$\text{Blending ratio (\% by mass) R2 of non-ground product} = (M2/(M1 + M2)) * 100$$

In this regard, M1 represents a blending amount (g) of a non-ground product, and M2 represents a blending amount (g) of a ground product.

Table 6 shows the particle size distributions, mode diameters, weight ratios, blending ratios, volume energy density, and resistance values of the positive electrode active materials of the batteries of Examples 13 and 16.

[Table 6]

| | Particle size distribution | Mode diameter of first and second positive electrode active materials | Weight ratio (positive electrode active material : binder) | Blending ratio of first positive electrode active material Ra (% by mass) | Blending ratio of second positive electrode active material Rb (% by mass) | Volume energy density (mAh/cm$^3$) | Resistance value (ohms) |
|---|---|---|---|---|---|---|---|
| Example 13 | Two kinds | First positive electrode active material: 0.65 micrometers Second positive electrode active material: 14.05 micrometers | 50:50 | 50 | 50 | 130.4 | 95882 |
| Example 16 | Two kinds | First positive electrode active material: 0.65 micrometers Second positive electrode active material: 5 micrometers | 80:20 | 20 | 80 | 168.6 | 68484 |

Note that a blending ratio Ra of the first positive electrode active material and a blending ratio Rb of the second positive electrode active material, shown in Table 6, are defined by the following equations:

$$\text{Blending ratio Ra of first positive electrode active material (\% by mass)} = (Ma/(Ma + Mb)) * 100$$

$$\text{Blending ratio Rb of second positive electrode active material (\% by mass)} = (Mb/(Ma + Mb)) * 100$$

In this regard, Ma represents a blending amount (g) of the first positive electrode active material, and Mb represents a blending amount (g) of the second positive electrode active material.

The followings are found from Table 5.

In Example 11 in which only the ground product having a mode diameter of 2 micrometers or less was used as the positive electrode active material, the discharge capacity (volume energy density) per unit volume is high. Further, in Examples 12 to 14 in which a mixture of a ground product having a mode diameter of 2 micrometers or less and a non-ground product having a mode diameter of more than 2 micrometers was used as the positive electrode active material, the discharge capacity per unit volume is high. This is assumed to be due to the fact that the film densification was progressed and the capacity was increased. On the other hand, in Example 15 in which only the non-ground product having a mode diameter of more than 2 micrometers was used as the positive electrode active material, the discharge capacity per unit volume is decreased, as compared to Example 11 in which only the ground product having a mode diameter of 2 micrometers or less was used as the positive electrode active material and Examples 12 to 14 in which a mixture of a ground product having a mode diameter of 2 micrometers or less and a non-ground product having a mode diameter of more than 2 micrometers was used as the positive electrode active material.

In Example 15 in which only the non-ground product having a mode diameter of more than 2 micrometers was used as the positive electrode active material, the resistance value is ten times as large as those of Example 11 in which only the ground product having a mode diameter of 2 micrometers or less was used as the positive electrode active material and Examples 12 to 14 in which a mixture of a ground product having a mode diameter of 2 micrometers or less and a non-ground product having a mode diameter of more than 2 micrometers was used as the positive electrode active material. The resistance value tends to decrease as the ratio of the non-ground product as the positive electrode active material increases. This is assumed to be due to the fact that the ionic conduction and electronic conduction of the whole electrode improved with an increase in the ratio of the non-ground product.

The followings are found from Table 6.

In Example 13 in which the second positive electrode active material having a mode diameter of 14.05 micrometers is used, the volume energy density is 130.4 mAh/cm$^3$. On the other hand, in Example 16 in which the second positive electrode active material having a mode diameter of 5 micrometers is used, the volume energy density is 168.6 mAh/cm$^3$, which is higher than that of Example 13. Thus, an excellent result is obtained in Example 16. This is assumed to be due to the fact that the mode diameter of the second positive electrode active material in Example 16 is decreased as compared to Example 13, and the content ratio of the glass binder is reduced as compared to Example 13.

The followings are found from Tables 5 and 6.

In order to further improve the volume energy density and further reduce the resistance value, the blending ratio of the ground product having a small particle size (namely, the first positive electrode active material) is preferably in the range of 20% by mass to 100% by mass, more preferably in the range of 25% by mass to 100% by mass, still more preferably in the range of 50% by mass to 100% by mass. In Example 16 in which the blending ratio of the ground product having a small particle size is 20% by mass, the volume energy density is particularly increased and the resistance value is particularly decreased. This is due to the factors other than the blending ratio of the ground product having a small particle size, i.e., the mode diameter of the second positive electrode active material and the content ratio of the glass binder.

<v. Green Sheet Type Solid-State Battery>

(Example 17)

A green sheet type solid-state battery was respectively produced using the positive electrode active material of Example 11. Specifically, the green sheet type solid-state battery was produced in the following manner. First, a positive electrode green sheet as the positive electrode precursor, a negative electrode green sheet as the negative electrode precursor, and a solid electrolyte green sheet as the solid electrolyte layer precursor were produced. Note that the positive electrode active material of Example 11 was used as the positive electrode active material of the positive electrode green sheet.

Subsequently, the positive electrode green sheet and the negative electrode green sheet were laminated so as to sandwich the solid electrolyte green sheet, and thus a laminated body was produced. Thereafter, the laminated body was heated and a pressure was applied to the laminated body in the thickness direction by hot pressing. Then, the laminated body was calcined at 420 degrees C for 10 minutes to form a green sheet type solid-state battery. Note that the thickness of the positive electrode layer (the positive electrode active material layer) was set to 25 micrometers, the thickness of the solid electrolyte layer was set to 10 micrometers, and the thickness of the negative electrode layer (the negative electrode active material layer) was set to 15 micrometers.

(Example 18)

A green sheet type solid-state battery was produced in the same manner as Example 17 except that the positive electrode active material of Example 12 was used.

(Example 19)

A green sheet type solid-state battery was produced in the same manner as Example 17 except that the positive electrode active material of Example 15 was used.

(Resistance Value)

The resistance of the batteries produced in the above manner was measured using a digital multimeter (Sanwa Electric Instrument Co., Ltd.). In the batteries of Examples 17 and 18, a large resistance value of megohm or more was observed. On the other hand, in the battery of Example 19, the resistance value was approximately zero, and the battery was found to be short-circuited. The occurrence of the short circuit is assumed to be due to the fact that the surface asperity of the positive electrode layer broke through the solid electrolyte layer in the process of producing a battery because of a large surface roughness of the positive electrode layer of Example 19 produced using only the non-ground product having a large particle size as the positive electrode active material.

<vi. Carbon Electrode>

(Example 20)

(Process of Producing Solid Electrolyte Pellets)

A solid electrolyte substrate was produced in the same manner as Example 1.

(Processes of Preparing Carbon Electrode Slurry and Forming Negative Electrode)

First, the following materials were weighed, and then stirred to prepare a negative electrode slurry having a weight ratio of a negative electrode active material and a glass binder containing Li (the negative electrode active material: the glass binder) of 80 : 20.

Negative electrode active material: spherical natural graphite 2 g, scale-shaped graphite 0.5 g
Glass binder containing Li (amorphous inorganic binder) : $Li_2O$-$SiO_2$-$B_2O_3$ 0.625 g
Thickener: acrylic binder 0.5 g
Solvent: terpineol 3.4 g

Subsequently, the prepared negative electrode slurry was applied onto the solid electrolyte substrate by screen printing so as to have a size of 6 mm phi. The resultant substrate was dried at 100 degrees C and calcined at 420 degrees C for 10 minutes to form a negative electrode (i.e., a carbon electrode).

(Process of Fabricating All-Solid-State Battery)

As a collector layer, an Ni foil was first attached to the negative electrode. Next, a metal Li/Cu foil was attached to the opposite surface to which the Ni foil was attached, and a pressure of 200 MPa was applied onto the surface by cold isostatic press to form a target battery.

(Example 21)

A battery was produced in the same manner as Example 20 except that, in the processes of preparing a carbon electrode slurry and forming a negative electrode, 2 g of spherical artificial graphite was used in place of 2 g of spherical natural graphite.

(Example 22)

A battery was produced in the same manner as Example 20 except that, in the processes of preparing a carbon electrode slurry and forming a negative electrode, the following materials were weighed and then stirred to prepare a negative electrode slurry having a weight ratio of a negative electrode active material and a glass binder containing Li (the negative electrode active material: the glass binder) of 50 : 50.

Negative electrode active material: scale-shaped graphite 2 g
Glass binder containing Li (amorphous inorganic binder) : $Li_2O$-$SiO_2$-$B_2O_3$ 2 g
Thickener: acrylic binder 0.7 g
Solvent: terpineol 5.6 g

(Comparative example 6)

A battery was produced in the same manner as Example 20 except that, in the processes of preparing a carbon electrode slurry and forming a negative electrode, the calcination temperature was set to 700 degrees C instead of 420 degrees C.

(Charge and Discharge Characteristics)

Battery charge-discharge cycles were performed under the following conditions, and the charge capacity and discharge capacity were determined. The results are shown in Table 6.

Measurement environmental conditions: in a dry air atmosphere at 25 degrees C
Charge-discharge conditions: in a 3 micro A constant current-constant voltage mode (cccv mode), at a cutoff voltage of 1.5 V/0.03 V

[Table 7]

| | Kind of binder | Negative electrode active material | Weight ratio (negative electrode active material : binder) | Drying temperature degrees (degrees C) | Calcination temperature degrees (degrees C) | Charge capacity (mAh/g) | Discharge capacity (mAh/g) |
|---|---|---|---|---|---|---|---|
| Example 20 | $Li_2O$-$SiO_2$-$B_2O_3$ | Spherical natural graphite Scale-shaped graphite | 80:20 | 100 | 420 | 394.57 | 328.82 |
| Example 21 | | Spherical artificial graphite Scale-shaped graphite | 80:20 | 100 | 420 | 397.10 | 296.98 |
| Example 22 | | Scale-shaped graphite | 50:50 | 100 | 420 | 409.66 | 280.92 |
| Comparative example 6 | | Spherical natural graphite Scale-shaped graphite | 80:20 | 100 | 700 | Unmeasurable | Unmeasurable |

The followings are found from Table 6.

In Examples 20 to 22 in which the carbon material was used as the negative electrode active material and the negative electrode slurry was calcined at 600 degrees C or less, high charge and discharge capacities are obtained. On the other hand, in Comparative example 6 in which the carbon material is used as the negative electrode active material and the calcination temperature of the negative electrode slurry is as high as 700 degrees C, it may be impossible to measure the charge capacity and the discharge capacity. This is because the carbon material as the negative electrode active material was burned out due to calcination at a high temperature of 700 degrees C and the sample did not function as a battery.

While the embodiments, their modifications, and examples of the present technology have been specifically described above, the present technology is not limited to the above embodiments, their modifications, and examples, but various variations are possible on the basis of the technical concept of the present technology.

For example, the embodiments and their modifications as well as the configurations, methods, processes, shapes, materials, values, and the like included in the examples are only examples and different configurations, methods, processes, shapes, materials, values, and the like may be used, if necessary.

The embodiments and their modifications as well as the configurations, methods, processes, shapes, materials, and values in the examples may be combined with each other without departing from the scope of the claims.

**Reference Signs List**

| | |
|---|---|
| 11, 21 | Positive electrode |
| 21A | Positive electrode current collector |
| 21B | Positive electrode active material layer |
| 12, 22 | Negative electrode |
| 22A | Negative electrode current collector |
| 22B | Negative electrode active material layer |
| 13 | Solid electrolyte layer |

**Claims**

1. A battery comprising:

   a positive electrode;
   a negative electrode; and
   an electrolyte layer between the positive electrode and the negative electrode,
   wherein the positive electrode includes at least one kind of an amorphous inorganic binder (B) that includes an oxide of at least one kind of element selected from the group including bismuth (Bi), zinc (Zn), boron (B), silicon (Si) and vanadium (V), wherein a weight ratio (A : B) of the positive electrode active material (A), and the amorphous inorganic binder (B), is in the range of 25 : 75 to 75 : 25, wherein the amorphous inorganic binder (B) is calcinated at a temperature, which temperature is more than or equal to a glass transition point of the amorphous inorganic binder (B) and 600 °C or less, wherein the amorphous inorganic binder (B) includes at least one material selected from the group of $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$-$B_2O_3$, ZnO-$SiO_2$-$B_2O_3$-$R_2O$-RO, ZnO-$SiO_2$-$B_2O_3$-RO, ZnO-$SiO_2$-$B_2O_3$ and $V_2O_5$-$P_2O_5$-RO, wherein R represents an alkali metal element or an alkali earth metal element.

2. A battery according to Claim 1, wherein the alkali metal is selected from the group consisting of lithium (Li), sodium (Na), and potassium (K), and wherein the alkali earth metal element is selected from the group consisting of calcium (Ca), strontium (Sr) and barium (Ba).

3. A battery according to Claim 1, wherein the inorganic binder includes lithium.

4. A battery according to Claim 1, wherein the inorganic binder is a glass ceramic containing a mixture of both an amorphous inorganic binder and a crystalline inorganic binder.

5. A battery according to Claim 1, wherein the positive electrode further includes a positive electrode active material.

**6.** A battery according to Claim 5, wherein the inorganic binder has ionic conductivity or electronic conductivity that is less than a respective ionic conductivity or electronic conductivity of the positive electrode active material.

**7.** A battery according to Claim 6, wherein the positive electrode active material includes first positive electrode active material particles having a size distribution of 2 micrometers or less, and second positive electrode active material particles having a size distribution of more than 2 micrometers to 20 micrometers or less.

**8.** A battery according to Claim 7, wherein a ratio (M1/(M1 + M2)) * 100) of a blending amount M1 of the first positive electrode active material particles to a total amount (M1 + M2) of a blending amount M1 of the first positive electrode active material particles and a blending amount M2 of the second positive electrode active material particles ranges from 25% by mass to 100% by mass.

**9.** A battery according to Claim 7, wherein a ratio (M1/(M1 + M2)) * 100) of a blending amount M1 of the first positive electrode active material particles to a total amount (M1 + M2) of a blending amount M1 of the first positive electrode active material particles and a blending amount M2 of the second positive electrode active material particles ranges from 50% by mass to 100% by mass.

**10.** An electronic device comprising:

a battery pack including at least one secondary battery, the secondary battery including
a positive electrode,
a negative electrode, and
an electrolyte layer between the positive electrode and the negative electrode,
wherein the positive electrode includes at least one kind of an amorphous inorganic binder (B) that includes an oxide of at least one kind of element selected from the group including bismuth (Bi), zinc (Zn), boron (B), silicon (Si) and vanadium (V), wherein a weight ratio (A:B) of the positive electrode active material (A), and the amorphous inorganic binder (B), is in the range of 25:75 to 75:25, wherein the amorphous inorganic binder (B) is calcinated at a temperature, which temperature is more than or equal to a glass transition point of the inorganic binder (B) and 600 °C or less, wherein the amorphous inorganic binder (B) includes at least one material selected from the group consisting of $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$- $B_2O_3$, ZnO-$SiO_2$- $B_2O_3$-$R_2O$-RO, ZnO-$SiO_2$- $B_2O_3$-RO, ZnO-$SiO_2$-$B_2O_3$ and $V_2O_5$-$P_2O_5$-RO, wherein R represents an alkali metal element or an alkali earth metal element.

**11.** An electronic device according to Claim 10, wherein the battery pack further includes a battery module including a plurality of the battery packs, and a charge discharge circuit connected to the battery module.

**12.** A positive electrode comprising:
an amorphous inorganic binder (B) that includes an oxide of at least one kind of element selected from the group including bismuth (Bi), zinc (Zn), boron (B), silicon (Si) and vanadium (V), wherein a weight ratio (A:B) of the positive electrode active material (A), and the amorphous inorganic binder (B), is in the range of 25:75 to 75:25, wherein the amorphous inorganic binder (B) is calcinated at a temperature, which temperature is more than or equal to a glass transition point of the inorganic binder (B) and 600 °C or less, wherein the amorphous inorganic binder (B) includes at least one material selected from the group consisting of $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$- $B_2O_3$, ZnO-$SiO_2$-$B_2O_3$-$R_2O$-RO, ZnO-$SiO_2$- $B_2O_3$-RO, ZnO-$SiO_2$-$B_2O_3$ and $V_2O_5$-$P_2O_5$-RO, wherein R represents an alkali metal element or an alkali earth metal element.

**Patentansprüche**

**1.** Batterie, aufweisend:

eine positive Elektrode;
eine negative Elektrode; und
eine Elektrolytschicht zwischen der positiven Elektrode und der negativen Elektrode,
wobei die positive Elektrode mindestens eine Art eines amorphen anorganischen Bindemittels (B) beinhaltet, das ein Oxid von mindestens einer Art von Element beinhaltet, das aus der Gruppe ausgewählt ist, die Wismut (Bi), Zink (Zn), Bor (B), Silizium (Si) und Vanadium (V) beinhaltet, wobei ein Gewichtsverhältnis (A : B) des aktiven Materials (A) der positiven Elektrode und des amorphen anorganischen Bindemittels (B) im Bereich von 25:75 bis 75:25 liegt, wobei das amorphe anorganische Bindemittel (B) bei einer Temperatur kalziniert wird, wobei die Temperatur mehr als oder gleich einem Glasübergangspunkt des amorphen anorganischen Bindemittels (B) und 600 °C oder weniger ist, wobei das amorphe anorganische Bindemittel (B) mindestens ein Material beinhaltet, das ausgewählt ist aus der Gruppe von $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$-$B_2O_3$, $ZnO$-$SiO_2$-$B_2O_3$-$R_2O$-$RO$, $ZnO$-$SiO_2$-$B_2O_3$-$RO$, $ZnO$-$SiO_2$-$B_2O_3$ und $V_2O_5$-$P_2O_5$-$RO$, wobei R ein Alkalimetallelement oder ein Erdalkalimetallelement darstellt.

2. Batterie nach Anspruch 1, wobei das Alkalimetall ausgewählt ist aus der Gruppe bestehend aus Lithium (Li), Natrium (Na) und Kalium (K), und worin das Erdalkalimetallelement ausgewählt ist aus der Gruppe bestehend aus Calcium (Ca), Strontium (Sr) und Barium (Ba).

3. Batterie nach Anspruch 1, wobei das anorganische Bindemittel Lithium beinhaltet.

4. Batterie nach Anspruch 1, wobei das anorganische Bindemittel eine Glaskeramik ist, die eine Mischung aus einem amorphen anorganischen Bindemittel und einem kristallinen anorganischen Bindemittel enthält.

5. Batterie nach Anspruch 1, wobei die positive Elektrode ferner ein aktives Material für positive Elektroden beinhaltet.

6. Batterie nach Anspruch 5, wobei das anorganische Bindemittel eine Ionenleitfähigkeit oder elektronische Leitfähigkeit aufweist, die geringer ist als eine jeweilige Ionenleitfähigkeit oder elektronische Leitfähigkeit des aktiven Materials der positiven Elektrode.

7. Batterie nach Anspruch 6, wobei das aktive Material der positiven Elektrode erste aktive Elektrodenmaterialteilchen mit einer Größenverteilung von 2 Mikrometern oder weniger beinhaltet sowie zweite aktive Elektrodenmaterialteilchen mit einer Größenverteilung von mehr als 2 Mikrometern bis 20 Mikrometern oder weniger.

8. Batterie nach Anspruch 7, wobei ein Verhältnis (M1/(M1 + M2)) * 100) einer Mischungsmenge M1 der ersten aktiven Materialteilchen der positiven Elektrode zu einer Gesamtmenge (M1 + M2) einer Mischungsmenge M1 der ersten aktiven Materialteilchen der positiven Elektrode und einer Mischungsmenge M2 der zweiten aktiven Materialteilchen der positiven Elektrode im Bereich von 25 Masse-% bis 100 Masse-% liegt.

9. Batterie nach Anspruch 7, wobei ein Verhältnis (M1/(M1 + M2)) * 100) einer Mischungsmenge M1 der ersten aktiven Materialteilchen der positiven Elektrode zu einer Gesamtmenge (M1 + M2) einer Mischungsmenge M1 der ersten aktiven Materialteilchen der positiven Elektrode und einer Mischungsmenge M2 der zweiten aktiven Materialteilchen der positiven Elektrode im Bereich von 50 Masse-% bis 100 Masse-% liegt.

10. Elektronische Vorrichtung, umfassend:

einen Batteriepack mit mindestens einer Sekundärbatterie, wobei die Sekundärbatterie Folgendes beinhaltet
eine positive Elektrode,
eine negative Elektrode und
eine Elektrolytschicht zwischen der positiven Elektrode und der negativen Elektrode,
wobei die positive Elektrode mindestens eine Art eines amorphen anorganischen Bindemittels (B) beinhaltet, das ein Oxid von mindestens einer Art von Element beinhaltet, das aus der Gruppe ausgewählt ist, die Wismut (Bi), Zink (Zn), Bor (B), Silizium (Si) und Vanadium (V) beinhaltet, wobei ein Gewichtsverhältnis (A : B) des aktiven Materials (A) der positiven Elektrode und des amorphen anorganischen Bindemittels (B) im Bereich von 25:75 bis 75:25 liegt, wobei das amorphe anorganische Bindemittel (B) bei einer Temperatur kalziniert wird, wobei die Temperatur mehr als oder gleich einem Glasübergangspunkt des amorphen anorganischen Bindemittels (B) und 600 °C oder weniger ist, wobei das amorphe anorganische Bindemittel (B) mindestens ein Material beinhaltet, das ausgewählt ist aus der Gruppe von $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$-$B_2O_3$, $ZnO$-$SiO_2$-$B_2O_3$-$R_2O$-$RO$, $ZnO$-$SiO_2$-$B_2O_3$-$RO$, $ZnO$-$SiO_2$-$B_2O_3$ und $V_2O_5$-$P_2O_5$-$RO$, wobei R ein Alkalimetallelement oder ein Erdalkalimetallelement darstellt.

11. Elektronische Vorrichtung nach Anspruch 10, wobei der Batteriepack ferner ein Batteriemodul mit einer Vielzahl der Batteriepacks und eine mit dem Batteriemodul verbundene Lade-/Entladeschaltung beinhaltet.

12. Positive Elektrode, umfassend:
ein amorphes anorganisches Bindemittel (B), das ein Oxid von mindestens einer Art von Element beinhaltet, das aus der Gruppe ausgewählt ist, die Wismut (Bi), Zink (Zn), Bor (B), Silizium (Si) und Vanadium (V) beinhaltet, wobei ein Gewichtsverhältnis (A:B) des aktiven Materials (A) der positiven Elektrode und des amorphen anorganischen Bindemittels (B) im Bereich von 25:75 bis 75:25 liegt, wobei das amorphe anorganische Bindemittel (B) bei einer Temperatur kalziniert wird, wobei die Temperatur mehr als oder gleich einem Glasübergangspunkt des anorganischen Bindemittels (B) und 600 °C oder weniger ist, wobei das amorphe anorganische Bindemittel (B) mindestens ein Material beinhaltet, ausgewählt aus der Gruppe bestehend aus $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$- $B_2O_3$, ZnO-$SiO_2$- $B_2O_3$-$R_2O$-RO, ZnO-$SiO_2$- $B_2O_3$-RO, ZnO-$SiO_2$-$B_2O_3$ und $V_2O_5$-$P_2O_5$-RO, wobei R ein Alkalimetallelement oder ein Erdalkalimetallelement darstellt.

## Revendications

1. Batterie comprenant :

   une électrode positive ;
   une électrode négative ; et
   une couche d'électrolyte entre l'électrode positive et l'électrode négative,
   l'électrode positive comportant au moins un type d'un liant inorganique amorphe (B) qui comporte un oxyde d'au moins un type d'élément choisi dans le groupe comportant le bismuth (Bi), le zinc (Zn), le bore (B), le silicium (Si) et le vanadium (V), un rapport pondéral (A:B) du matériau actif d'électrode positive (A) et du liant inorganique amorphe (B) se situant dans la gamme de 25:75 à 75:25, le liant inorganique amorphe (B) étant calciné à une température, laquelle température est supérieure ou égale à un point de transition vitreuse du liant inorganique amorphe (B) et de 600 °C ou moins, le liant inorganique amorphe (B) comportant au moins un matériau choisi dans le groupe de $Bi_2O_3$-ZnO-$B_2O_3$, $Bi_2O_3$-$SiO_2$-$B_2O_3$-$R_2O$, $Bi_2O_3$-$SiO_2$-$R_2O$, ZnO-$SiO_2$-$B_2O_3$, $Bi_2O_3$-$SiO_2$-$B_2O_3$, ZnO-$SiO_2$-$B_2O_3$-$R_2O$-RO, ZnO-$SiO_2$-$B_2O_3$-RO, ZnO-$SiO_2$-$B_2O_3$ et $V_2O_5$-$P_2O_5$-RO, R représentant un élément métallique alcalin ou un élément métallique alcalino-terreux.

2. Batterie selon la revendication 1, dans laquelle le métal alcalin est choisi dans le groupe constitué par le lithium (Li), le sodium (Na) et le potassium (K), et dans laquelle l'élément métallique alcalino-terreux est choisi dans le groupe constitué par le calcium (Ca), le strontium (Sr) et le baryum (Ba).

3. Batterie selon la revendication 1, dans laquelle le liant inorganique comporte du lithium.

4. Batterie selon la revendication 1, dans laquelle le liant inorganique est une vitrocéramique contenant un mélange à la fois d'un liant inorganique amorphe et d'un liant inorganique cristallin.

5. Batterie selon la revendication 1, dans laquelle l'électrode positive comporte en outre un matériau actif d'électrode positive.

6. Batterie selon la revendication 5, dans laquelle le liant inorganique a une conductivité ionique ou conductivité électronique qui est inférieure à une conductivité ionique ou conductivité électronique respective du matériau actif d'électrode positive.

7. Batterie selon la revendication 6, dans laquelle le matériau actif d'électrode positive comporte des premières particules de matériau actif d'électrode positive ayant une distribution granulométrique de 2 micromètres ou moins, et des deuxièmes particules de matériau actif d'électrode positive ayant une distribution granulométrique de plus de 2 micromètres jusqu'à 20 micromètres ou moins.

8. Batterie selon la revendication 7, dans laquelle un rapport (M1/(M1+M2)) * 100) d'une quantité de mélange M1 des premières particules de matériau actif d'électrode positive à une quantité totale (M1+M2) d'une quantité de mélange M1 des premières particules de matériau actif d'électrode positive et d'une quantité de mélange M2 des deuxièmes particules de matériau actif d'électrode positive va de 25 % en masse à 100 % en masse.

9. Batterie selon la revendication 7, dans laquelle un rapport (M1/(M1+M2)) * 100) d'une quantité de mélange M1 des premières particules de matériau actif d'électrode positive à une quantité totale (M1+M2) d'une quantité de mélange M1 des premières particules de matériau actif d'électrode positive et d'une quantité de mélange M2 des deuxièmes particules de matériau actif d'électrode positive va de 50 % en masse à 100 % en masse.

**10.** Dispositif électronique comprenant :

un bloc-batterie comportant au moins une batterie rechargeable, la batterie rechargeable comportant une électrode positive,
une électrode négative, et
une couche d'électrolyte entre l'électrode positive et l'électrode négative,
l'électrode positive comportant au moins un type d'un liant inorganique amorphe (B) qui comporte un oxyde d'au moins un type d'élément choisi dans le groupe comportant le bismuth (Bi), le zinc (Zn), le bore (B), le silicium (Si) et le vanadium (V), un rapport pondéral (A:B) du matériau actif d'électrode positive (A) et du liant inorganique amorphe (B) se situant dans la gamme de 25:75 à 75:25, le liant inorganique amorphe (B) étant calciné à une température, laquelle température est supérieure ou égale à un point de transition vitreuse du liant inorganique (B) et de 600 °C ou moins, le liant inorganique amorphe (B) comportant au moins un matériau choisi dans le groupe constitué par $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$-$B_2O_3$, $ZnO$-$SiO_2$-$B_2O_3$-$R_2O$-$RO$, $ZnO$-$SiO_2$-$B_2O_3$-$RO$, $ZnO$-$SiO_2$-$B_2O_3$ et $V_2O_5$-$P_2O_5$-$RO$, R représentant un élément métallique alcalin ou un élément métallique alcalino-terreux.

**11.** Dispositif électronique selon la revendication 10, dans lequel le bloc-batterie comporte en outre un module de batteries comportant une pluralité des blocs-batteries, et un circuit de charge-décharge relié au module de batteries.

**12.** Électrode positive comprenant :
un liant inorganique amorphe (B) qui comporte un oxyde d'au moins un type d'élément choisi dans le groupe comportant le bismuth (Bi), le zinc (Zn), le bore (B), le silicium (Si) et le vanadium (V), un rapport pondéral (A:B) du matériau actif d'électrode positive (A) et du liant inorganique amorphe (B) se situant dans la gamme de 25:75 à 75:25, le liant inorganique amorphe (B) étant calciné à une température, laquelle température est supérieure ou égale à un point de transition vitreuse du liant inorganique (B) et de 600 °C ou moins, le liant inorganique amorphe (B) comportant au moins un matériau choisi dans le groupe constitué par $Bi_2O_3$-$ZnO$-$B_2O_3$, $Bi_2O_3$-$SiO_2$-$B_2O_3$-$R_2O$, $Bi_2O_3$-$SiO_2$-$R_2O$, $ZnO$-$SiO_2$-$B_2O_3$, $Bi_2O_3$-$SiO_2$-$B_2O_3$, $ZnO$-$SiO_2$-$B_2O_3$-$R_2O$-$RO$, $ZnO$-$SiO_2$-$B_2O_3$-$RO$, $ZnO$-$SiO_2$-$B_2O_3$ et $V_2O_5$-$P_2O_5$-$RO$, R représentant un élément métallique alcalin ou un élément métallique alcalino-terreux.

[Fig. 1]

[Fig. 2]

[Fig. 3]

[Fig. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013051478 A1
- JP 2001243984 A
- JP 2001126757 A
- US 2012321940 A1
- US 2009325064 A1
- US 2013196227 A1
- US 2012308900 A1
- JP 2011204510 A
- JP 2012243743 A
- JP 2010177024 A
- JP 2014011028 A